(19) Europäisches Patentamt
European Patent Office
Office européen des brevets

(11) **EP 3 474 682 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **17735387.7**

(22) Anmeldetag: **14.06.2017**

(51) Int Cl.:
*A23L 3/46* (2006.01)    *A23C 1/04* (2006.01)
*B01D 1/20* (2006.01)    *F28F 13/12* (2006.01)
*A23L 3/22* (2006.01)    *F28F 9/02* (2006.01)
*F28D 7/16* (2006.01)    *A23P 10/40* (2016.01)
*F28D 11/00* (2006.01)    *F28D 21/00* (2006.01)
*F26B 21/06* (2006.01)    *F26B 3/12* (2006.01)
*B01D 1/00* (2006.01)    *B01D 1/04* (2006.01)
*B01D 1/18* (2006.01)

(86) Internationale Anmeldenummer:
**PCT/EP2017/000694**

(87) Internationale Veröffentlichungsnummer:
**WO 2017/220191 (28.12.2017 Gazette 2017/52)**

(54) **VERFAHREN ZUM ERHITZEN EINES KONZENTRATS IN EINER ANLAGE ZUM ZERSTÄUBUNGSTROCKNEN UND ANLAGE ZUR DURCHFÜHRUNG DES VERFAHRENS**

PROCESS FOR HEATING A CONCENTRATE IN A SPRAY-DRYING SYSTEM AND SYSTEM FOR IMPLEMENTATION OF THE PROCESS

PROCEDE DE CHAUFFAGE D'UN CONCENTRE DANS UN SYSTEME DE SECHAGE PAR ATOMISATION ET SYSTEME POUR L'EXECUTION DU PROCEDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016 DE 102016007636**

(43) Veröffentlichungstag der Anmeldung:
**01.05.2019 Patentblatt 2019/18**

(73) Patentinhaber: **GEA TDS GmbH**
**31157 Sarstedt (DE)**

(72) Erfinder:
• **SCHWENZOW, Uwe**
**48683 Ahaus (DE)**
• **ROLLE, Ulrich**
**48351 Everswinkel (DE)**

• **ASSING, Hubert**
**48683 Ahaus (DE)**
• **TACKE, Ludger**
**46342 Velen (DE)**
• **SCHMIED, Andreas**
**48249 Dülmen (DE)**

(74) Vertreter: **Hauck Patentanwaltspartnerschaft mbB**
**Postfach 11 31 53**
**20431 Hamburg (DE)**

(56) Entgegenhaltungen:
**EP-A1- 0 458 310        EP-A2- 0 437 888**
**WO-A1-2008/077399    WO-A1-2012/040502**
**DE-A1-102013 010 460    DE-B3-102014 012 279**
**GB-A- 801 740            GB-A- 2 132 495**

EP 3 474 682 B1

**Beschreibung**

TECHNISCHES GEBIET

Die Erfindung betrifft ein Verfahren zur Erhitzung eines Konzentrats in einer Anlage zum Zerstäubungstrocknen, insbesondere für temperatursensible Konzentrate, nach dem Oberbegriff des Anspruchs 1 sowie eine Anlage, welche zur Durchführung des Verfahrens nach Anspruch 1 geeignet ist. Die Erfindung betrifft weiterhin ein Verfahren zur Steuerung des Erhitzens eines Konzentrats in einer Anlage zum Zerstäubungstrocknen, wobei das Konzentrat durch Hochdruck-Erhitzen nach Anspruch 1 behandelt wird. Unter temperatursensiblen Konzentraten sollen insbesondere solche Substrate verstanden werden, die einen hohen Gehalt an Proteinen und Trockenstoffen und wenig Wasser aufweisen, die leicht denaturieren und die im Verlauf des Zerstäubungstrocknens unter aseptischen Bedingungen zu einem keimfreien Endprodukt verarbeitet werden.

STAND DER TECHNIK

Die Herstellung pulverförmiger Nahrungsmittelprodukte, insbesondere Milchprodukte, wie beispielsweise leicht lösliche Nahrungsmittel für Kleinkinder, erfolgt in vielen Fällen durch Zerstäubungs- oder Sprühtrocknung in einem sogenannten Trocknerturm. Dort wird ein zuvor auf einen bestimmten Gehalt an Trockensubstanz in einem Verdampfer bzw. einem Eindampfer aufkonzentriertes und anschließend in einem Erhitzer auf eine definierte Temperatur angewärmtes Produkt, nachfolgend als Konzentrat bezeichnet, in einen heißen Luftstrom entweder über Scheiben oder, wie im vorliegenden bevorzugten Fall, über Düsen, insbesondere Einstoffdüsen, zerstäubt. Diesen sog. Druckzerstäuber-Düsen wird das aus dem Erhitzer austretende Konzentrat mittels einer Hochdruck-Kolbenpumpe, einer sogenannten Düsenpumpe, mit einem Druck, der bis maximal 350 bar reichen kann, zugeführt.

Die Statik der Trocknertürme ist in der Regel nicht ausreichend, um die schwere Hochdruck-Kolbenpumpe zu tragen und um sie so in der unmittelbaren Nähe zu den Druckzerstäuber-Düsen, was aus technologischen und verfahrenstechnischen Gründen wünschenswert wäre, zu installieren. Eine in der Nähe der Druckzerstäuber-Düsen angeordnete Hochdruck-Kolbenpumpe würde in diesem Bereich, dem sogenannten Heißraum im Kopfraum des Trocknerturms, bei Umgebungstemperaturen arbeiten, die 75 bis 80 °C erreichen können und eine aseptische Betriebsweise erfordern. Eine weitere thermische Inaktivierung von Mikroorganismen wäre darüber hinaus nicht möglich.

Aus den vorgenannten Gründen wird die Hochdruck-Kolbenpumpe bislang im unteren Bereich des Trocknerturms angeordnet. Ein signifikanter Höhenunterschied zwischen der Hochdruck-Kolbenpumpe und den Druckzerstäuber-Düsen wird über eine Steigleitung überbrückt, die planmäßig oder zwangsläufig auch als Heißhaltestrecke fungiert.

Um eine möglichst lange und hygienisch einwandfreie Lagerung des pulverförmigen Nahrungsmittelproduktes sicherzustellen, muss das Endprodukt eine gute Löslichkeit aufweisen und möglichst keimfrei sein. Die erforderliche Keimfreiheit ergibt sich durch das Abtöten von Mikroorganismen weitestgehend für das aus dem Erhitzer austretende Konzentrat, wenn dieses mit einem geeigneten Temperatur- und Haltezeitverlauf geführt und wenn in die Betrachtung die als Heißhaltestrecke fungierende Steigleitung zu den Druckzerstäuber-Düsen einbezogen wird. Für die Herstellung von sogenanntem "low heat pulver" ist eine Temperatur von max. 77 °C, von sogenanntem "high heat pulver" von ca. 85 °C und von sogenanntem "ultra high heat pulver" von bis zu 125 °C erforderlich.

Die zwangsläufige mittlere Verweilzeit des Konzentrats in der Steigleitung nach vorheriger Hochdruckbehandlung in Verbindung mit einer heißen Temperatur beeinflusst die Löslichkeit des Endprodukts in unerwünschter Weise. Darüber hinaus führt die lange Heißhaltung in der Steigleitung zu einer Denaturierung des Konzentrats. So beträgt beispielsweise die mittlere Verweilzeit des Konzentrats 42 Sekunden, wenn es in einer 30 m langen Steigleitung mit einem Durchmesser DN50 und mit einem Volumenstrom von 5.000 Liter/h gefördert wird. Dies bedeutet in der Regel auch Qualitätsminderung des Endprodukts. Eine diesbezügliche Denaturierung kann beispielsweise die Pulverqualität von Babyfood derart beeinflussen, dass dessen vollständige Löslichkeit nicht mehr sichergestellt ist und dadurch eine nicht hinnehmbare Klümpchenbildung in der zubereiteten Babynahrung auftritt. Darüber hinaus führt die lange Verweilzeit bei hohen Temperaturen zu chemischen Reaktionen im Konzentrat und zur Ansatzbildung, dem sog. Produkt-Fouling, an den Wänden der Steigleitung und in den Druckzerstäuber-Düsen, wodurch sich die Produktionszeit für eine vorgelegte Charge Konzentrat unerwünscht verlängert.

So darf beispielsweise bei Milchkonzentraten zur Vermeidung von Kristallisationsvorgängen in der Lactose die Temperatur in der Steigleitung und damit bis zu den Druckzerstäuber-Düsen nicht höher als 65 bis 68 °C sein. Daher begrenzt die lange Steigleitung die zulässige dortige Temperatur.

Eine Verbesserung des mikrobakteriellen Status des Konzentrats vor dem Eindampfer, beispielsweise durch Entkeimung mittels Mikrofiltration, ist bekannt, sie ist aufwändig, aber verbessert den mikrobakteriellen Status des Endprodukts.

Die notwendige Keimfreiheit bis zum Eintritt in die Drückzerstäuber-Düsen kann auch durch die Hochdruck-Kolbenpumpe gefährdet werden, da diese das Konzentrat mit vertretbarem technischem Aufwand nicht unter aseptischen Bedingungen fördern kann. Aseptische Förderbedingungen erfordern hingegen einen erheblichen technischen Aufwand, der in der Praxis in der Regel nicht betrieben wird oder betrieben werden kann. Über die Kolben-der Hochdruck-Kolbenpumpe können Keime aus der Umgebungsluft in das Konzentrat eingetragen werden, sodass dort eine Reinfektion stattfindet. Das pulverförmige Endprodukt kann dann verkeimt sein und die Verkeimung wird unter der Einwirkung der im Endprodukt notorisch verbleibenden Restfeuchte zeitabhängig zunehmen.

Eine aseptische Förderung des aus dem Erhitzer austretenden flüssigen Ausgangsprodukts ist nach dem Stand der Technik in der stromabwärts angeordneten Hochdruck-Kolbenpumpe nur mit erhöhtem technischem Aufwand möglich.

Die bekannten Anlagen zum Sprühtrocknen, bei denen ein Niederdruck-Erhitzen und anschließendes Druckerhöhen im Fußbereich des Trocknerturms auf maximal 350 bar und eine Förderung des Konzentrats über eine Steigleitung bis zu den Druckzerstäuber-Düsen erfolgt, weisen folgende Nachteile auf:

- die Steigleitung wirkt wie eine technologisch an sich unerwünschte Verweilzeitstrecke und ein Heißhalter;
- die Verweilzeit verringert zwangsläufig die Eintrittstemperatur in die Druckzerstäuber-Düsen;
- durch die Verweilzeit ergibt sich ein unerwünschter Viskositätsanstieg (Geliereffekt);
- der Zustand des temperatursensiblen Konzentrats ist vor den Druckzerstäuber-Düsen nicht klar definiert, weil die Verweilzeit in der Steigleitung nicht klar definiert werden kann;
- durch die Verweilzeit in Verbindung mit der Heißhaltung kommt es zur Denaturierung des Konzentrats, die mit verstärkten Konzentrat-Ablagerungen einhergeht;
- es ergibt sich eine geringere Standzeit der Anlage, die dadurch öfter zu reinigen ist;
- die Hochdruck-Kolbenpumpe müsste steril arbeiten, d.h. das Konzentrat muss durch die Pumpe aseptisch behandelt werden, was mit hohen Kosten verbunden ist;
- Hochdruck-Kolbenpumpen, die nicht aseptisch arbeiten, führen zu einem stark verkeimten Endprodukt;
- durch die relativ niedrige Temperatur vor den Druckzerstäuber-Düsen ergibt sich eine reduzierte Mengenleistung des Trocknerturms.

Zum Erreichen der notwendigen Sterilität des unter hohem Druck aus der Hochdruck-Kolbenpumpe austretenden flüssigen Konzentrats könnte ein geeignetes Hochdruck-Erhitzen dieses Konzentrats auf dem Weg zu den Druckzerstäuber-Düsen vorgesehen werden. Dieses Hochdruck-Erhitzen könnte unmittelbar vor den Druckzerstäuber-Düsen erfolgen, wodurch die Temperatur in der Steigleitung auf eine unkritische Höhe reduziert werden könnte. Diese Anordnung würde auch weiterhin den Betrieb einer nicht aseptisch fördernden Hochdruck-Kolbenpumpe am Fuße des Trocknerturms erlauben. In diesem Zusammenhang wurde bereits vorgeschlagen, das Hochdruck-Erhitzen in einem hinreichend druckfesten, gewendelten Monorohr vorzunehmen, das zur Beheizung von außen mit Dampf beaufschlagt wird. Dieser Vorschlag ist jedoch nicht zielführend, da kein gleichmäßiger Wärmeeintrag über die Außenseite und über die gesamte Länge des Monorohres und damit keine gleiche Verweilzeit für alle Teilchen des im Monorohr strömenden Konzentrats sichergestellt ist.

Ein Wärmeaustauscher in Gestalt eines Monorohres ist auch aus der US 3,072,486 A bekannt. Diese Druckschrift beschreibt die Zubereitung von löslichem Milchpulver in einer Anlage zur Zerstäubungstrocknung. Ein Konzentrat aus Magermilch oder Vollmilch wird in einer Heizeinrichtung auf eine Temperatur zwischen ca. 40 °C und 49 °C vorgewärmt, anschließend mittels einer Verdrängerpumpe einem Mischer zugeführt und dort unter Zufuhr eines Gases in einen stabilen Schaum aufgeschäumt. Der Schaum wird über eine Rohrleitung aus dem Mischer abgeführt, einer Hochdruckpumpe zugeführt, erfährt dort eine Druckerhöhung auf beispielsweise ca. 103 bar und tritt an einem Sprühkopf, der über die Rohrleitung mit der Hochdruckpumpe verbunden ist, in einen Sprühtrockner aus. Ein in den Sprühkopf einmündender Endabschnitt der Rohrleitung ist von einem Rohr größeren Durchmessers umgeben, das in einem Ofen auf eine Temperatur von ca. 232 °C erhitztes Gas dem Sprühkopf mit einer Temperatur zwischen ca. 82 °C und 84 °C zuführt. Der Endabschnitt der den Schaum transportierenden Rohrleitung stellt somit ein von außen mit einem Gas beheiztes Monorohr dar.

Auf einen Wärmeaustauscher in Gestalt einer Rohr-in-Rohr-Vorrichtung (Monorohr) für Drücke im Bereich von 2 bis 400 atm (ca. 400 bar) wird auch in der WO 2012/040 502 A1 hingewiesen

Ein Wärmeaustauscher, der die Forderungen nach einem hinreichend gleichmäßigen Wärmeeintrag und nach einer für alle Teilchen des Konzentrats annähernd gleichen Verweilzeit auf niedrigem Druckniveau erfüllt, wäre grundsätzlich ein sogenannter Rohrbündel-Wärmeaustauscher, der prinzipiell an die Stelle des vorgenannten Monorohres treten könnte. Die grundsätzliche Bauweise eines diesbezüglichen Rohrbündel-Wärmeaustauschers ist beispielsweise in der DE 94 03 913 U1 beschrieben. Die DE 10 2005 059 463 A1 offenbart ebenfalls einen derartigen Rohrbündel-Wärmeaustauscher für ein niedriges Druckniveau und zeigt darüber hinaus auf, wie eine Anzahl von Rohrbündeln in diesem Wärmeaustauscher parallel angeordnet und fluiddurchgängig mittels Verbindungsbogen oder Verbindungsarmaturen in Reihe geschaltet werden können. Eine diesbezügliche Anordnung zeigt **Figur 1** dieses Dokuments (Stand der Technik).

Obgleich zwischenzeitlich ein Krümmer bzw. eine Verbindungsarmatur für Produktdrücke bis 350 bar zur Verbindung der Rohrbündel in einem diesbezüglichen Rohrbündel-Wärmeaustauscher zur Verfügung steht (DE 10 2014 012 279 A1), wobei der bekannte Rohrbündel-Wärmeaustauscher (DE 94 03 913 U1; DE 10 2005 059 463 A1) für dieses hohe Druckniveau nicht geeignet ist, ist auch das verfahrenstechnische Problem nicht gelöst, das darin besteht, ein Konzentrat für das Zerstäubungstrocknen vor den Druckzerstäuber-Düsen einer Behandlung zu unterziehen, bei der eine Denaturierung des Konzentrats und Produktablagerungen vermieden und ein keimfreies, d.h. mikrobiologisch einwandfreies Endprodukt sichergestellt wird.

Die DE 10 2013 010 460 A1 beschreibt eine Vorrichtung zur Einflussnahme auf den Abströmbereich einer Rohrträgerplatte eines Rohrbündel-Wärmeaustauschers, insbesondere für die Nahrungsmittel- und Getränkeindustrie, mit wenigstens einem Rohrbündel des Rohrbündel-Wärmeaustauschers, das aus einer Gruppe von parallel geschalteten, innenseits jeweils produktdurchströmten Innenrohren besteht, die kreisringförmig, auf einem einzigen Kreis und in einem als Ringraum ausgebildeten Außenkanal angeordnet sind und sich in dessen Längsrichtung erstrecken und endseitig jeweils in einer ersten und einer zweiten Rohrträgerplatte abstützen. Die Innenrohre münden in einen umlaufenden Ringraum aus, der sich in einem ringraumförmigen austrittsseitigen Kanal fortsetzt. Die bekannte Vorrichtung erfüllt die planmäßige Zielsetzung, eine thermisch und gleichzeitig möglichst schonende Behandlung des Produkts sicherzustellen. Dies wird dadurch erreicht, dass alle Teilmengen eines der Wärmebehandlung zu unterziehenden Produkts, die die jeweiligen Innenrohre und die nachgeordneten Bereiche der Vorrichtung durchströmen, zeitgleich und über die gleiche Zeitdauer den erforderlichen gleichen Temperatur-Niveau-Verlauf durchlaufen und dabei gleichen thermischen und strömungsmechanischen Bedingungen unterliegen.

Die Aufgabe der vorliegenden Erfindung besteht somit darin, die Nachteile des Standes der Technik zu überwinden und ein Verfahren zum Erhitzen eines Konzentrats in einer Anlage zum Zerstäubungstrocknen der gattungsgemäßen Art und eine Anlage zur Durchführung des Verfahrens bereitzustellen, die bei einer wirtschaftlichen Steigerung der Mengenleistung des Trocknerturms die Neigung zur Denaturierung des Konzentrats und zu Ablagerungen desselben vermindern und dabei ein mikrobiologisch einwandfreies Endprodukt sicherstellen.

## ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche. Eine Anlage, welche zur Durchführung des Verfahrens nach Anspruch 1 geeignet ist, wird mit den Merkmalen des Anspruchs 8 angegeben. Vorteilhafte Ausgestaltungen der erfindungsgemäßen Anlagen sind Gegenstand der zugeordneten Unteransprüche. Ein Verfahren zur Steuerung des Erhitzens eines Konzentrats in einer Anlage zum Zerstäubungstrocknen, wobei das Konzentrat durch Hochdruck-Erhitzen nach Anspruch 1 behandelt wird, ist Gegenstand des Anspruchs 7.

Das erfinderische Verfahren geht von einem Stand der Technik aus mit einem Schritt (a):

(a) Druckerhöhen (P) des Konzentrats (K), ausgehend von einem Niederdruck-Niveau (p1) und einer Vorlauf-Temperatur (T1), auf ein Hochdruck-Niveau (p2), das bis an maximal 350 bar heranreichen kann,

es erfordert zur Herstellung eines keimfreien Endprodukts keine aseptisch arbeitende Hochdruck-Kolbenpumpe, und es ist durch die Abfolge folgender Schritte (b) bis (d) gekennzeichnet:

(b) Hochdruck-Erhitzen (H) des Konzentrats (K) auf dem Hochdruck-Niveau (p2) von der Vorlauf-Temperatur (T1) auf eine erhöhte Zerstäubungs-Temperatur (T3), die im Bereich von 75 bis 80 °C liegt, mittels eines Hochdruck-Wärmeaustauschers, der sekundärseitig mit einem Wärmeträgermittel (W) beaufschlagt und der als Rohrbündel-Wärmeaustauscher mit einer Vielzahl von vom Konzentrat (K) parallel durchströmten Innenrohren ausgebildet ist, die kreisringförmig und auf einem einzigen Kreis angeordnet sind und in Summe einen Innenkanal ausbilden, der, in Strömungsrichtung gesehen, im Anschluss an die Innenrohre in Form eines umlaufenden Ringraumes ausgeführt ist,

(c) definiertes Scherbeanspruchen (S) des Konzentrats (K) im Verlauf oder im unmittelbaren Nachgang zur Behandlung nach Schritt (b) mit Mitteln, die in einem ringraumförmigen austrittsseitigen Kanal bestehen, der einerseits mit dem Ausgang des umlaufenden Ringraumes und andererseits mit einem zweiten Hochdruck-Leitungsabschnitt verbunden ist und der eine definierte Erstreckungslänge und einen definierten längenabhängigen Verlauf seiner Kanaldurchtrittsquerschnitte aufweist und

(d) anschließend unverzügliches Überführen (Ü) des nach Schritt (c) behandelten Konzentrats (K) an den Ort seines Druckzerstäubens (DZ), wobei eine Überführungszeit (Δt) für das unverzügliche Überführen (Ü) durch einen minimal möglichen strömungstechnisch wirksamen Abstand zwischen den Mitteln zur Durchführung des Schrittes (c) und dem Ort des Druckzerstäubens (DZ) bestimmt ist.

Beim Verfahren wird das Erhitzen des Konzentrats auf eine erhöhte Zerstäubungs-Temperatur in einem Schritt auf einem Hochdruck-Niveau durchgeführt, nachdem das Konzentrat zunächst einem Druckerhöhen von einem Niederdruck-Niveau auf das Hochdruck-Niveau unterzogen wurde.

Im Verfahren besteht ein wesentlicher erfinderischer Grundgedanke darin, dass das Konzentrat im Verlauf des Hochdruck-Erhitzens oder im unmittelbaren Nachgang zum Hochdruck-Erhitzen auf die erhöhte Zerstäubungs-Temperatur einer definierten Scherbeanspruchung unterzogen wird. Unter definierter Scherbeanspruchung soll eine strömungsmechanische Beanspruchung des Konzentrats verstanden werden, die Scherkräfte auf das Konzentrat ausübt. Diese Scherkräfte sind durch eine definierte Erstreckungslänge und einen definierten längenabhängigen Verlauf eines ringraumförmigen austrittsseitigen Kanals, den das Konzentrat durchströmen muss, bestimmt und können durch die geometrische Ausgestaltung diese Kanals den jeweiligen Erfordernissen des Konzentrats (Rezeptur) angepasst werden.

Danach erfolgt ein unverzügliches Überführen des Konzentrats an den Ort seines Druckzerstäubens. Die Überführungszeit für dieses unverzügliche Überführen wird so kurz, wie dies möglich ist, eingerichtet. So kurz, wie möglich, bedeutet konkret, dass die Mittel zum Hochdruck-Erhitzen, die die Mittel zur Scherbeanspruchung vorzugsweise einschließen, einen minimal möglichen strömungstechnisch wirksamen Abstand zum Ort des Druckzerstäubens, den Druckzerstäuber-Düsen, erhalten. Vorzugsweise münden die Mittel zur Scherbeanspruchung unmittelbar in die Druckzerstäuber-Düsen ein. Unter einem strömungstechnisch wirksamen Abstand ist in diesem Zusammenhang der tatsächlich vom Konzentrat zurückgelegte Strömungsweg zu verstehen.

Mit dem erfindungsgemäßen Hochdruck-Erhitzen wird die bislang im Stand der Technik hinzunehmende nachteilige Heißhaltung quasi gekappt und es gelingt, unmittelbar vor den Druckzerstäuber-Düsen, die Erhitzung zu definieren bzw. die Wärmebehandlung reproduzierbar einzurichten. Es können gewünschte Wärmebelastungen, abhängig und angepasst an das Konzentrat, den Massenstrom und die Inhaltsstoffe, definiert eingestellt werden. Darüber hinaus ist auch eine kontrollierte Denaturierung des Konzentrats mit Blick auf das gewünschte Endprodukt möglich, indem Temperatur und Verweilzeit beim Hochdruck-Erhitzen eingestellt werden. Dadurch wird beispielsweise eine effektive mikrobiologische Verbesserung des Endproduktes oder eine definierte Eiweiß- oder Stärkequellung erreicht.

Durch die geringere Temperatur in der Steigleitung und die geringere Verweilzeit bei hoher Temperatur im Zuge des Hochdruck-Erhitzens ist der Viskositätsanstieg im Konzentrat, der sog. Geliereffekt, bedingt durch Kristallisationsvorgänge und/oder produktspezifische Eigenschaften, geringer als bei bekannten Verfahren. Dieser Geliereffekt wird durch die definierte Scherbeanspruchung einerseits tendenziell reduziert und andererseits wird der Geliereffekt standardisiert, wodurch die Druckzerstäuber-Düsen erst viel später durch Ansatzbildung verkleben. Damit werden Reinigungs- und Rüstzeiten reduziert.

Ein weiterer Vorteil durch die erfindungsgemäßen Maßnahmen besteht darin, dass das Konzentrat mit einer höheren Trockenstoff-Konzentration zugeführt werden kann. Eine Trockenstoffanhebung ist in Abhängigkeit von den Eigenschaften des Konzentrats von 55 auf max. 65 Mengenprozent möglich. Unter Mengenprozent des Konzentrats soll das Verhältnis in Prozent, gebildet aus der Masse des Konzentrats, die in einer Masse Flüssigkeit enthalten ist, verstanden werden. Die Leistung der Druckzerstäubungs-Anlage bzw. der Trocknungsanlage steigt bekanntermaßen mit einer höheren Trockenstoff-Konzentration und höherer Zerstäubungs-Temperatur an den Druckzerstäuber-Düsen, wobei die Zerstäubungs-Temperatur gegenüber bekannten Verfahren bei gleicher Pulverqualität um 1 bis max. 5 °C erhöht werden kann.

- Eine Erhöhung der Temperatur des an der Druckzerstäuber-Düse austretenden Konzentrats um 1 °C hat eine Effizienzsteigerung, d.h. eine Steigerung der Mengenleistung des Trocknerturms von 2,5 bis 3 % zur Folge $\left(\frac{(2,5-3)\%}{1°C}\right)$.

- Das erfindungsgemäße Verfahren senkt somit die erforderliche spezifische Energie zum Trocknen und vorhandene Trocknungskapazitäten können erweitert werden.

- Es besteht die Aussicht, das hier vorgestellte erfindungsgemäße Verfahren auch für eine UHT-Behandlung des Konzentrats bis in den aseptischen Bereich zu verwenden mit dem Ziel der Herstellung von sogenanntem "ultra high heat pulver".

Das definierte Scherbeanspruchen des Konzentrats im Verlauf oder im unmittelbaren Nachgang zum Hochdruck-Erhitzen wird dergestalt durchgeführt, dass das Konzentrat definierte Durchtrittsquerschnitte mit definierten Erstreckungslängen mit definierten erhöhten Strömungsgeschwindigkeiten durchströmt. Zur Steuerung des definierten Scherbeanspruchens sieht eine Ausgestaltung des Verfahrens vor, dass eine erhöhte Strömungsgeschwindigkeit des Konzentrats beim Hochdruck-Erhitzen gegenüber dessen Strömungsgeschwindigkeit im dem Hochdruck-Erhitzen vorgelagerten Behandlungsbereich um 20 bis 25 % erhöht ist. Diesbezüglich wird vorgeschlagen, dass die erhöhte Strömungsgeschwindigkeit maximal 3 m/s beträgt. Da diese Erhöhung der Strömungsgeschwindigkeit auf Hochdruck-Niveau stattfindet, spielen die damit verbundenen zusätzlichen Druckverluste beim Hochdruck-Erhitzungsvorgang keine signifikante Rolle. Die erhöhte Strömungsgeschwindigkeit ergibt einen besseren Wärmeübergang auf der Konzentratseite, woraus folgende weitere Vorteile resultieren:

- es ist ein Wärmeaustausch mit geringerer Wärmeaustauscherfläche möglich;
- es ist ein Eiweißkonzentrat mit höherer Konzentration möglich;
- es sind ein höherer Volumenstrom und damit eine höhere Durchsatzleistung möglich;

- es sind, bedingt durch den besseren Wärmeübergang, eine höhere Erhitzung des Konzentrats und dadurch eine höhere Trocknungsleistung möglich;
- es erfolgt eine definierte, planmäßig gewünschte Denaturierung des Konzentrats.

Das erfindungsgemäße Verfahren sieht vor, dass das Hochdrück-Niveau, auf das das Konzentrat durch Druckerhöhen gebracht wird, bis maximal 350 bar beträgt. Weiterhin sieht eine Ausgestaltung des erfindungsgemäßen Verfahrens vor, dass die erhöhte Zerstäubungs-Temperatur im Bereich von 75 bis 80 °C liegt und hier bevorzugt auf 80 °C eingestellt wird. Das Verfahren sieht weiterhin vor, ein Konzentrat mit einer Trockenstoff-Konzentration bis maximal 65 Mengenprozent (65 m%) zu behandeln.

Die Anlage, welche zur Durchführung des Verfahrens nach Anspruch 1 geeignet ist, die in ihrer grundlegenden Konzeption von keinem nächstliegenden Stand der Technik ausgeht, besteht zur Lösung der erfindungsgemäßen Aufgabe aus einem Trocknerturm mit Druckzerstäuber-Düsen, einem Vorlaufbehälter, der über eine Niederdruck-Leitung, in der eine Vorlaufpumpe angeordnet ist, fluidgängig mit dem Eintritt einer Hochdruck-Kolbenpumpe verbunden ist. Ein Hochdruck-Wärmeaustauscher ist in einer den Ausgang der Hochdruck-Kolbenpumpe mit den Druckzerstäuber-Düsen fluidgängig verbindenden Hochdruck-Leitung angeordnet. Der Hochdruck-Wärmeaustauscher ist als Rohrbündel-Wärmeaustauscher mit einer Vielzahl von vom Konzentrat parallel durchströmten Innenrohren ausgebildet, die kreisringförmig und auf einem einzigen Kreis angeordnet sind und in Summe einen Innenkanal ausbilden. Der Innenkanal ist, in Strömungsrichtung gesehen, im Anschluss an die Innenrohre in Form eines umlaufenden Ringraumes ausgeführt. Ein erster Hochdruck-Leitungsabschnitt der Hochdruck-Leitung verbindet den Ausgang der Hochdruck-Kolbenpumpe mit dem Eingang des Hochdruck-Wärmeaustauschers, und ein zweiter Hochdruck-Leitungsabschnitt der Hochdruck-Leitung verbindet den Ausgang des Hochdruck-Wärmeaustauschers fluidgängig mit den Druckzerstäuber-Düsen.

Eine strömungstechnisch wirksame Länge des zweiten Hochdruck-Leitungsabschnitts ist auf ein konstruktiv mögliches Mindestmaß reduziert, d.h. der Ausgang des Hochdruck-Wärmeaustauschers ist, bezogen auf den Strömungsweg des Konzentrats, so nah, wie dies konstruktiv möglich ist, an die Druckzerstäuber-Düsen herangeführt.

Der Hochdruck-Wärmeaustauscher weist ausgangsseitig Mittel zur definierten Scherbeanspruchung des geförderten Konzentrats auf, wobei diese Mittel ohne bewegliche Elemente und/oder Zufuhr von Fremdenergie rein strömungsmechanisch durch definierte Durchtrittsquerschnitte, definierte Längen der Strömungswege und definierte erhöhte Strömungsgeschwindigkeiten wirksam sind.

Die Mittel zur definierten Scherbeanspruchung des Konzentrats bestehen in einem ringraumförmigen austrittsseitigen Kanal, der einerseits mit dem Ausgang des umlaufenden Ringraumes und andererseits mit dem zweiten Hochdruck-Leitungsabschnitt verbunden ist. Dabei weist der ringraumförmige austrittsseitige Kanal im allgemeinsten Falle eine definierte Erstreckungslänge und einen definierten, von der Erstreckungslänge abhängigen Verlauf seiner Kanaldurchtrittsquerschnitte auf.

Unter dem Merkmal hinsichtlich der Anordnung einer Vielzahl von parallel durchströmten Innenrohren ist eine Anordnung zu verstehen, die, unabhängig von der Anzahl der Innenrohre, nicht einen gesamten Kreisquerschnitt eines Rohrbündel-Wärmeaustauschers belegt. Vielmehr sind alle Innenrohre auf dem besagten einzigen Kreis angeordnet, der einen inneren Bereich, nicht nur ein begrenztes Zentrum, von Innenrohren unbelegt lässt. Diese Anordnung macht es möglich, dass der Innenkanal, gebildet durch die kreisringförmig und auf einem einzigen Kreis angeordneten Innenrohre, in Strömungsrichtung gesehen, im Anschluss an die Innenrohre in Form eines umlaufenden Ringraumes ausgeführt werden kann.

Dabei ist es im Sinne einer gleichen Verweilzeit für alle Teile des wärmebehandelten Konzentrats von Vorteil, wie dies auch vorgeschlagen wird, dass die Kanaldurchtrittsquerschnitte über die gesamte Erstreckungslänge konstant sind. Diese wünschenswerte Gleichbehandlung wird weiterhin dadurch befördert, dass die erhöhte Strömungsgeschwindigkeit durch den gesamten Rohrbündel-Wärmeaustauscher bis zum Ende des definierten Scherbeanspruchens des Konzentrats möglichst gleichförmig ist, wobei eine weitere Ausführungsform diesbezüglich vorsieht, dass der Kanaldurchtrittsquerschnitt dem Gesamtdurchtrittsquerschnitt aller parallel durchströmten Innenrohre entspricht.

Das erfindungsgemäße Verfahren und die Anlage zu seiner Durchführung lassen sich in vorteilhafter Weise konzentratabhängig steuern. Hierzu schlägt die Erfindung ein Verfahren zur Steuerung des Erhitzens eines Konzentrats in einer Anlage zum Zerstäubungstrocknen vor, wobei das Konzentrat durch Hochdruck-Erhitzen nach Anspruch 1 behandelt wird. Die Steuerungsparameter für das Hochdruck-Erhitzen sind durch die Eigenschaften des zu erhitzenden Konzentrats und die physikalischen Randbedingungen bestimmt. Unter den Eigenschaften des zu erhitzenden Konzentrats wird dessen Volumenstrom, Viskosität, Druck, Temperatur und Trockenstoff-Konzentration und unter den physikalischen Randbedingungen wird Druck und Temperatur am Ort des Druckzerstäubens verstanden. Die Steuerungsparameter, jeweils bezogen auf das Konzentrat, sind das Hochdruck-Niveau, die erhöhte Zerstäubungs-Temperatur, eine erhöhte Strömungsgeschwindigkeit beim Hochdruck-Erhitzen und eine Intensität des Scherbeanspruchens.

Die Steuerungsparameter werden mittels einer vor oder bei Inbetriebnahme der Anlage zum Sprühtrocknen erstellten oder hinterlegten Kalibrierfunktion eingestellt. Die Kalibrierfunktion wird gewonnen, indem

- beim An- und Einfahren der Anlage mit einem diskreten Konzentrat (Rezeptur) bis zur Gewinnung einer befriedigenden Produktqualität Steuerungsparameter der in Rede stehenden Art erhalten werden,
- die registriert und in einer Steuerung in Form der "Kalibrierfunktion" (Steuerungsparameter = Funktion von (Konzentrat bzw. Rezeptur)) abgespeichert werden.

Bei einer späteren Behandlung des gleichen Konzentrats (Rezeptur) kann auf diese Erfahrungswerte in Form dieser Kalibrierfunktion zugegriffen und die notwendigen Steuerungsparameter können entsprechend eingestellt werden.

## KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens und in den verschiedensten Ausführungsformen einer Anlage zur Durchführung des Verfahrens realisiert ist, sind in der Zeichnung ein bekanntes Verfahren und, ausgehend von diesem bekannten Verfahren, eine bevorzugte Ausgestaltung des erfinderischen Verfahrens schematisch dargestellt. Ein bevorzugtes Ausführungsbeispiel einer Anlage zur Durchführung des Verfahrens mit einem als Rohrbündel-Wärmeaustauscher ausgebildeten Hochdruck-Wärmeaustauscher ist in der Zeichnung dargestellt und wird nachfolgend beschrieben. Es zeigen

**Figur 1**　　in Form eines vereinfachten Verfahrensschemas ein Verfahren zum Erhitzen eines Konzentrats in einer Anlage zum Zerstäubungstrocknen nach dem Stand der Technik;

**Figur 1a**　　in Form eines vereinfachten Verfahrensschemas ein erfindungsgemäßes Verfahren zum Erhitzen eines Konzentrats in einer Anlage zum Zerstäubungstrocknen;

**Figur 2**　　in schematischer Darstellung eine Anlage nach dem Stand der Technik, welche zur Durchführung des Verfahrens nach dem Stand der Technik gemäß **Figur 1** geeignet ist;

**Figur 3**　　in schematischer Darstellung eine Anlage, welche zur Durchführung des erfindungsgemäßen Verfahrens gemäß **Figur 1a** geeignet ist und

**Figur 4**　　im Meridianschnitt einen austrittsseitigen Bereich eines in Form eines Rohrbündel-Wärmeaustauschers ausgebildeten Hochdruck-Wärmeaustauschers.

## DETAILLIERTE BESCHREIBUNG

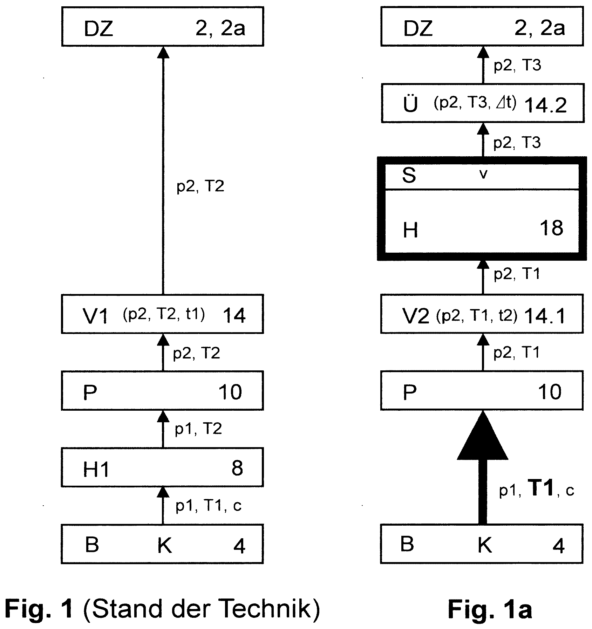

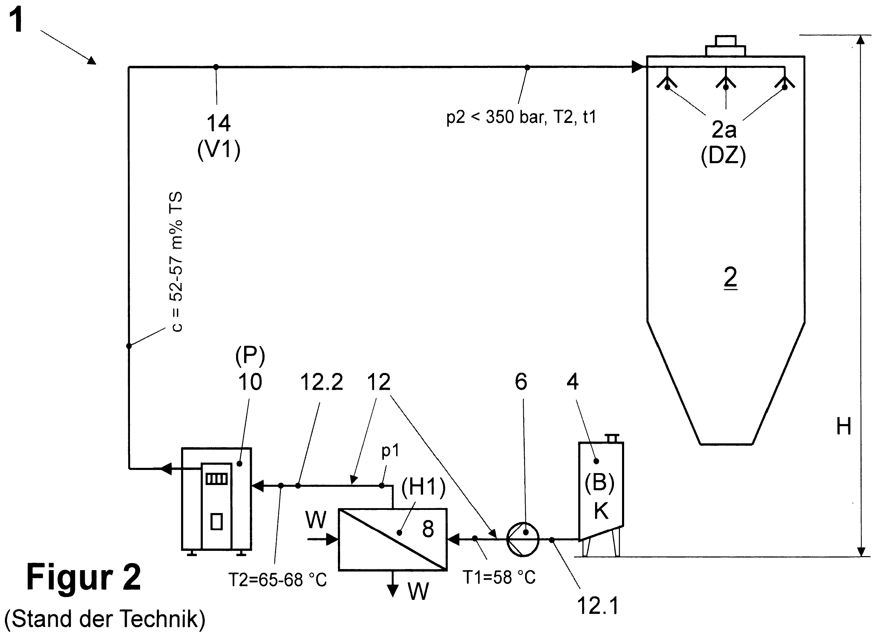

### Stand der Technik (**Figuren 1** und **2**)

Ein Verfahren zum Erhitzen eines Konzentrats K in einer Anlage zum Sprühtrocknen (Trocknungsanlage) 1 nach dem Stand der Technik zeigt **Figur 1** und eine Anlage 1 nach dem Stand der Technik zur Durchführung des bekannten Verfahrens zeigt **Figur 2.** Nachfolgend werden das Verfahren und die zugeordnete Anlage 1 anhand dieser beiden Figuren parallel abgehandelt. Die genannten Temperaturen, Drücke und die Trockenstoff-Konzentration sind beispielhaft gewählt und können in der Praxis nach oben oder unten abweichen.

Das in einem Trocknerturm 2 der Trocknungsanlage 1 durch ein Druckzerstäuben DZ über Druckzerstäuber-Düsen 2a versprühtes Konzentrat K erfährt ein Bevorraten B in einem Vorlaufbehälter 4 (**Figuren 1, 2**). Der Vorlaufbehälter 4 ist über einen ersten Leitungsabschnitt 12.1 einer Niederdruck-Leitung 12, in dem eine Vorlaufpumpe 6 angeordnet ist, fluidgängig mit dem primärseitigen Eintritt eines Niederdruck-Wärmeaustauschers 8, in dem ein Niederdruck-Erhitzen H1 des Konzentrats K von einer Vorlauf-Temperatur $T1 = 58\,°C$ auf eine Zulauf-Temperatur $T2 = 65$ bis $68\,°C$, die auch annähernd noch an den Druckzerstäuber-Düsen 2a vorliegt, durchgeführt wird, verbunden. Der Niederdruck-Wärmeaustauscher 8 ist sekundärseitig mittels eines Wärmeträgermediums W, vorzugsweise Heißwasser, beaufschlagt. Eine Hochdruck-Kolbenpumpe 10 ist eingangsseitig über einen zweiten Leitungsabschnitt 12.2 der Niederdruck-Leitung 12 mit dem primärseitigen Ausgang des Niederdruck-Wärmeaustauschers 8 und ausgangsseitig über eine Hochdruck-Leitung 14 mit den Druckzerstäuber-Düsen 2a verbunden.

In der Hochdruck-Kolbenpumpe 10 erfolgt ein Druckerhöhen P des Konzentrats K von einem eingangsseitig vorliegenden Niederdruck-Niveau p1 auf ein ausgangsseitig erzeugtes Hochdruck-Niveau p2, das bis an $p2 = $ maximal 350 bar heranreichen kann und mit dem abzüglich des Druckabfalls bis zu den Druckzerstäuber-Düsen 2a letztere betrieben werden. Das Konzentrat K weist eine Trockenstoff-Konzentration c auf, die beispielsweise bei 52 bis 57 Massenprozent (m%) Trockenstoff TS liegen kann.

Der Trocknerturm 2 weist bis in seinen Kopfbereich, in dem die Druckzerstäube-Düsen 2a angeordnet sind, eine Turmhöhe H auf. Die Hochdruck-Leitung 14 überwindet im Wesentlichen in Form einer Steigleitung diese Turmhöhe H. Bei einer Turmhöhe von beispielsweise $H = 30\,m$ ist die Hochdruck-Leitung 14 wegen der der Steigleitung vor- und nachgeordneten Anschlussleitungen mindestens auch 30 m lang. Bei einem Durchmesser DN50 der Hochdruck-Leitung 14 ergibt sich bei einem Volumenstrom von beispielsweise 5.000 Liter/Stunde für ein erstes Verweilen V1 des Konzentrats K mit der Zulauf-Temperatur T2 auf dem Hochdruck-Niveau p2 und mit der Trockenstoff-Konzentration c eine mittlere erste Verweilzeit t1 von 42 Sekunden. Die Probleme, die mit dem beschriebenen Verfahren nach dem Stand der Technik einhergehen, wurden vorstehend thematisiert.

**Erfindung**

Verfahren und Trocknungsanlage (**Figuren 1a, 3** und **4**)

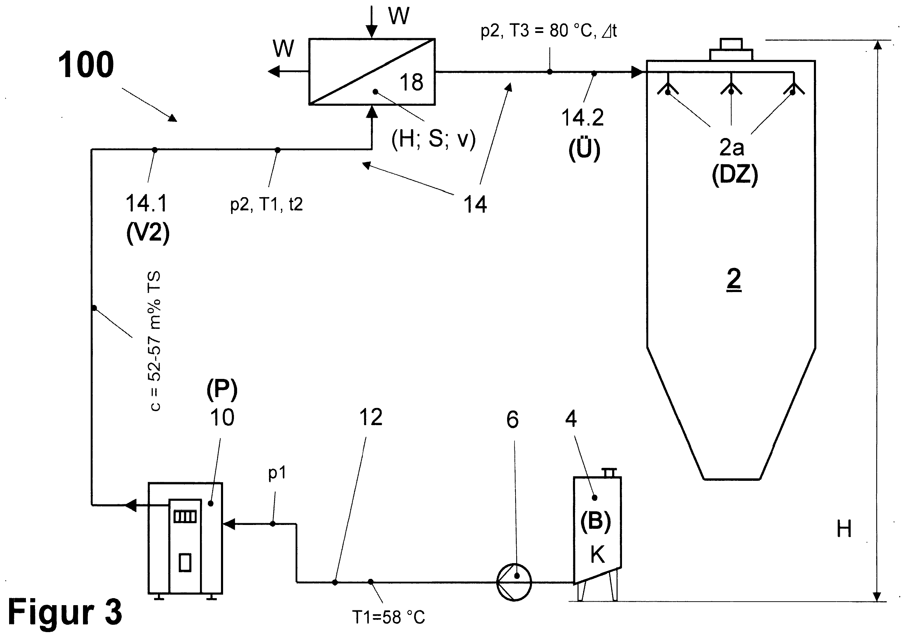

Ein erfindungsgemäßes Verfahren zum Erhitzen eines Konzentrats K in einer Anlage zum Zerstäubungstrocknen 100 zeigt **Figur 1a** und eine erfindungsgemäße Anlage 100 zur Durchführung dieses Verfahrens zeigt **Figur 3**. Nachfolgend werden das Verfahren und eine zugeordnete Anlage 100 anhand dieser beiden Figuren parallel abgehandelt. Die genannten Temperaturen, Drücke und die Trockenstoff-Konzentration sind beispielhaft gewählt und können in der Praxis nach oben oder unten abweichen.

**Figur 1a** zeigt augenfällig, durch breitere Linienführung hervorgehoben, die Unterschiede zwischen dem Verfahren nach dem Stand der Technik (**Figur 1**) und dem erfindungsgemäßen Verfahren auf, und **Figur 3** zeigt anhand der Trocknungsanlage 100 auf, wie diese Unterschiede vorrichtungstechnisch realisiert werden. Soweit eine Übereinstimmung gegeben ist, wurden gleiche Bezeichnungen verwendet. Es wird daher, um Wiederholungen zu vermeiden, diesbezüglich auf die vorstehende Beschreibung zu den **Figuren 1** und **2** verwiesen.

Die Hochdruck-Leitung 14 (**Figur 3**) ist über die Primärseite eines Hochdruck-Wärmeaustauschers 18 geführt, wobei ein erster Hochdruck-Leitungsabschnitt 14.1 der Hochdruck-Leitung 14 den Ausgang der Hochdruck-Kolbenpumpe 10 mit dem Eingang des Hochdruck-Wärmeaustauschers 18 und ein zweiter Hochdruck-Leitungsabschnitt 14.2 der Hochdruck-Leitung 14 den Ausgang des Hochdruck-Wärmeaustauschers 18 mit den Druckzerstäuber-Düsen 2a verbindet. Der Hochdruck-Wärmeaustauscher 18 wird sekundärseitig mit einem Wärmeträgermittel W, vorzugsweise Heißwasser, beaufschlagt. Die in **Figur 3** beispielhaft gewählten Werte für das Niederdruck-Niveau p1, das Hochdruck-Niveau p2, die Vorlauf-Temperatur T1 und die Trockenstoff-Konzentration c entsprechen weitestgehend jenen Werten, die bei Verfahren nach dem Stand der Technik und der Anlage 1 zu seiner Durchführung genannt wurden (siehe **Figuren 1, 2**).

In dem Hochdruck-Wärmeaustauscher 18 erfolgt ein Hochdruck-Erhitzen H des Konzentrats K auf dem Hochdruck-Niveau p2 von der Vorlauf-Temperatur (T1) auf eine erhöhte Zerstäubungs-Temperatur T3, die im Bereich von 75 bis 80 °C liegen kann (**Figur 3**). Weiterhin ist ein definiertes Scherbeanspruchen S des Konzentrats K im Verlauf oder im unmittelbaren Nachgang zum Hochdruck-Erhitzen H bei einer erhöhten Strömungsgeschwindigkeit v vorgesehen (**Figuren 3, 1a**). Hierzu weist der Hochdruck-Wärmeaustauscher 18 ausgangsseitig Mittel zur definierten Scherbeanspruchung des geförderten Konzentrats K auf.

Da der Hochdruck-Wärmeaustauscher 18 auf der Turmhöhe H angeordnet ist (**Figur 3**), ergibt sich nunmehr in der Steigleitung zwischen letzterem und dem Ausgang der Hochdruck-Kolbenpumpe 10, d.h. in dem ersten Hochdruck-Leitungsabschnitt 14.1, ein zweites Verweilen V2 des Konzentrats K mit der Vorlauf-Temperatur T1 auf dem Hochdruck-Niveau p2 und mit der Trockenstoff-Konzentration c mit einer mittleren zweiten Verweilzeit t2, die kleiner als die erste Verweilzeit t1 und bei sonst annähernd gleichen Prozessdaten damit unkritischer als diese ist.

Anschließend wird ein unverzügliches Überführen Ü des durch definiertes Scherbeanspruchen S behandelten Konzentrats K an den Ort seines Druckzerstäubens DZ durchgeführt (**Figur 1a**), wobei eine Überführungszeit Δt für das unverzügliche Überführen Ü durch einen minimal möglichen strömungstechnisch wirksamen Abstand zwischen den Mitteln zur Durchführung des definierten Scherbeanspruchens S und dem Ort des Druckzerstäubens DZ bestimmt ist. Das unverzügliche Überführen Ü findet in dem entsprechend bemessenen zweiten Hochdruck-Leitungsabschnitt 14.2 statt, der auf ein konstruktiv mögliches Mindestmaß reduziert ist (**Figur 3**).

Das erfindungsgemäße Verfahren unterscheidet sich von dem Verfahren nach dem Stand der Technik, wie ein Vergleich der **Figur 1** mit **Figur 1a** und der **Figur 2** mit **Figur 3** zeigt, verfahrenstechnisch durch einen Verzicht auf das Niederdruck-Erhitzen H1 (**Figur 1a**) und dementsprechend vorrichtungstechnisch durch einen Verzicht auf den Niederdruck-Wärmeaustauscher 8 (**Figur 3**). Der Hochdruck-Wärmeaustauscher 18 muss allein ein Hochdruck-Erhitzen H von der Vorlauf-Temperatur T1 (beispielsweise 58 °C) auf die erhöhte Zerstäubungs-Temperatur T3 (beispielsweise max. 80 °C) bewältigen, wodurch eine Steigerung der Mengenleistung des Trocknerturms 2 ohne Qualitätseinbußen erreicht wird.

Entscheidend ist im Vergleich zum Verfahren nach dem Stand der Technik, dass beim erfindungsgemäßen Verfahren der im Wesentlichen durch die Steigleitung gebildete erste Hochdruck-Leitungsabschnitt 14.1 auf ganzer Länge mit der gegenüber der Zulauf-Temperatur T2 (beispielsweise 65 bis 68 °C beim Verfahren nach dem Stand der Technik) unkritischen Vorlauf-Temperatur T1 (beispielsweise 58 °C) durchströmt wird. Das zweite Verweilen V2 des Konzentrats K mit der Vorauf-Temperatur T1 auf dem Hochdruck-Niveau p2 und mit der Trockenstoff-Konzentration c mit der mittleren zweiten Verweilzeit t2 ist daher technologisch gesehen völlig unkritisch.

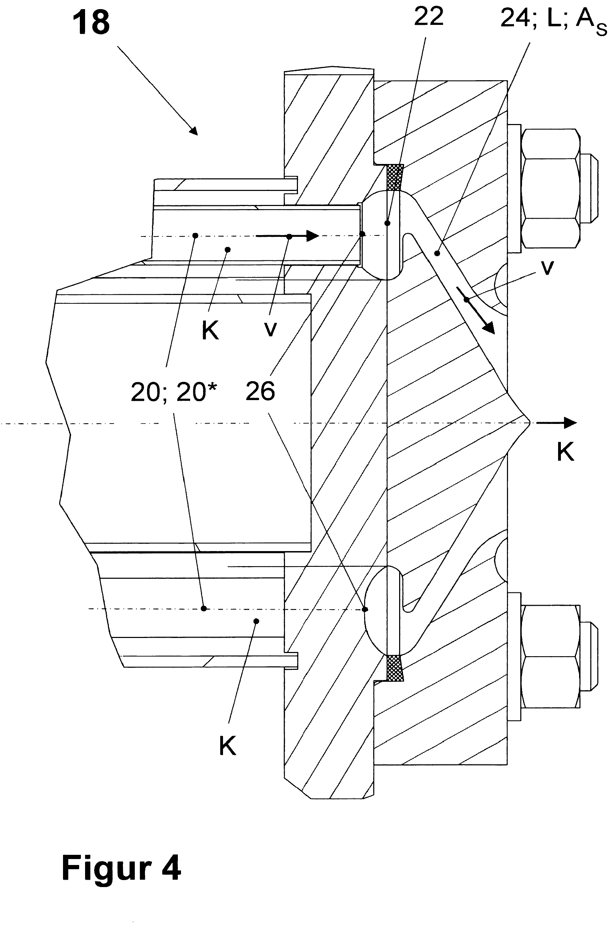

Der Hochdruck-Wärmeaustauscher 18 ist als Rohrbündel-Wärmeaustauscher mit einer Vielzahl von vom Konzentrat K parallel durchströmten Innenrohren 20 ausgebildet (**Figur 4**). Die Innenrohre 20 sind kreisringförmig und auf einem einzigen Kreis 26 angeordnet und bilden in Summe einen Innenkanal 20* aus, der, in Strömungsrichtung gesehen, im Anschluss an die Innenrohre (20) in Form eines umlaufenden Ringraumes (22) ausgeführt ist. Die Mittel zur definierten Scherbeanspruchung des geförderten Konzentrats K sind ausgangsseitig am Rohrbündel-Wärmeaustauscher 18 angeordnet und bestehen in einem ringraumförmigen austrittsseitigen Kanal 24, der einerseits mit dem Ausgang des umlaufenden Ringraumes 22 und andererseits mit dem zweiten Hochdruck-Leitungsabschnitt 14.2 verbunden ist. Der ringraumförmige austrittsseitige Kanal 24 weist eine definierte Erstreckungslänge L und einen definierten längenabhängigen Verlauf seiner Kanaldurchtrittsquerschnitte As auf und wird, ebenso wie die Innenrohre 20 von dem Konzentrat K mit einer erhöhten Strömungsgeschwindigkeit v durchströmt.

BEZUGSZEICHENLISTE DER VERWENDETEN ABKÜRZUNGEN

**Figuren 1, 2** (Stand der Technik))

1    Trocknungsanlage (Anlage zum Zerstäubungstrocknen)

2    Trocknerturm
2a    Druckzerstäuber-Düse

4    Vorlaufbehälter
6    Vorlaufpumpe
8    Niederdruck-Wärmeaustauscher
10    Hochdruck-Kolbenpumpe (Homogenisator)

12    Niederdruck-Leitung
12.1    erster Leitungsabschnitt
12.2    zweiter Leitungsabschnitt

14    Hochdruck-Leitung

H    Turmhöhe
c    Trockenstoff-Konzentration (in Massenprozent (m%) Trockenstoff (TS))
t1    erste Verweilzeit

Temperaturen

T1    Vorlauf-Temperatur (ca. 58 °C)
T2    Zulauf-Temperatur (ca. 65-68 °C)

Drücke

p1    Niederdruck-Niveau
p2    Hochdruck-Niveau (< 350 bar)

Stoffe

K    Konzentrat (Produkt)
TS    Trockenstoff
W    Wärmeträgermedium

Verfahrensschritte

B    Bevorraten
DZ    Druckzerstäuben
H1    Niederdruck-Erhitzen
P    Druckerhöhen
V1    erstes Verweilen

**Figuren 1a, 3, 4** (Erfindung)

100    Trocknungsanlage (Anlage zum Zerstäubungstrocknen)
14.1    erster Hochdruck-Leitungsabschnitt
14.2    zweiter Hochdruck-Leitungsabschnitt

18    Hochdruck-Wärmeaustauscher (Rohrbündel-Wärmeaustauscher)
20    Innenrohr
20*    Innenkanal
22    umlaufender Ringraum
24    ringraumförmiger austrittsseitiger Kanal
26    Kreis

As    Kanaldurchtrittsquerschnitt
L    Erstreckungslänge

t2    zweite Verweilzeit
Δt    Überführungszeit
v    erhöhte Strömungsgeschwindigkeit (bei H)

Temperatur

T3    erhöhte Zerstäubungs-Temperatur (75-80°C)

Verfahrensschritt

H    Hochdruck-Erhitzen
S    Scherbeanspruchen
Ü    unverzügliches Überführen
V2    zweites Verweilen

**Patentansprüche**

1.  Verfahren zum Erhitzen eines Konzentrats (K) in einer Anlage zum Zerstäubungstrocknen (100) mit einem Schritt (a):

    (a) Druckerhöhen (P) des Konzentrats (K), ausgehend von einem Niederdruck-Niveau (p1) und einer Vorlauf-Temperatur (T1), auf ein Hochdruck-Niveau (p2), das bis an maximal 350 bar heranreichen kann,

    **gekennzeichnet durch** die Abfolge der folgenden Schritte (b) bis (d):

    (b) Hochdruck-Erhitzen (H) des Konzentrats (K) auf dem Hochdruck-Niveau (p2) von der Vorlauf-Temperatur (T1) auf eine erhöhte Zerstäubungs-Temperatur (T3), die im Bereich von 75 bis 80 °C liegt, mittels eines Hochdruck-Wärmeaustauschers (18), der sekundärseitig mit einem Wärmeträgermittel (W) beaufschlagt und der als Rohrbündel-Wärmeaustauscher mit einer Vielzahl von vom Konzentrat (K) parallel durchströmten Innenrohren ausgebildet ist, die kreisringförmig und auf einem einzigen Kreis angeordnet sind und in Summe einen Innenkanal ausbilden, der, in Strömungsrichtung gesehen, im Anschluss an die Innenrohre in Form eines umlaufenden Ringraumes ausgeführt ist,
    (c) definiertes Scherbeanspruchen (S) des Konzentrats (K) im Verlauf oder im unmittelbaren Nachgang zur Behandlung nach Schritt (b) mit Mitteln, die in einem ringraumförmigen austrittsseitigen Kanal bestehen, der einerseits mit dem Ausgang des umlaufenden Ringraumes und andererseits mit einem zweiten Hochdruck-Leitungsabschnitt verbunden ist und der eine definierte Erstreckungslänge und einen definierten längenabhängigen Verlauf seiner Kanaldurchtrittsquerschnitte aufweist und
    (d) anschließend unverzügliches Überführen (Ü) des nach Schritt (c) behandelten Konzentrats (K) an den Ort seines Druckzerstäubens (DZ), wobei eine Überführungszeit (Δt) für das unverzügliche Überführen (Ü) durch einen minimal möglichen strömungstechnisch wirksamen Abstand zwischen den Mitteln zur Durchführung des Schrittes (c) und dem Ort des Druckzerstäubens (DZ) bestimmt ist.

2.  Verfahren nach Anspruch 1,
    **dadurch gekennzeichnet,**
    **dass** eine erhöhte Strömungsgeschwindigkeit (v) des Konzentrats (K) beim Hochdruck-Erhitzen (H) gegenüber dessen Strömungsgeschwindigkeit im dem Hochdruck-Erhitzen (H) vorgelagerten Behandlungsbereich um 20 bis 25 % erhöht ist.

3.  Verfahren nach Anspruch 2,
    **dadurch gekennzeichnet,**
    **dass** die erhöhte Strömungsgeschwindigkeit (v) beim Hochdruck-Erhitzen (H) bis maximal 3 m/s beträgt.

4.  Verfahren nach einem der vorhergehenden Ansprüche,
    **dadurch gekennzeichnet,**
    **dass** das Hochdruck-Niveau (p2) bis maximal 350 bar beträgt.

5.  Verfahren nach einem der vorhergehenden Ansprüche,
    **dadurch gekennzeichnet,**
    **dass** die erhöhte Zerstäubungs-Temperatur (T3) auf 80 °C eingestellt wird.

6.  Verfahren nach einem der vorhergehenden Ansprüche,
    **dadurch gekennzeichnet,**
    **dass** das Konzentrat (K) mit einer Trockenstoff-Konzentration (c) bis maximal 65 Mengenprozent (65 m%) behandelt wird.

7.  Verfahren zur Steuerung des Erhitzens eines Konzentrats in einer Anlage zum Zerstäubungstrocknen (100), wobei das Konzentrat (K) durch Hochdruck-Erhitzen (H) nach Anspruch 1 behandelt wird,

    • wobei die Steuerungsparameter für das Hochdruck-Erhitzen (H) durch die Eigenschaften des zu erhitzenden Konzentrats (K) und die physikalischen Randbedingungen bestimmt sind,
    • wobei unter den Eigenschaften des zu erhitzenden Konzentrats (K) dessen Volumenstrom, Viskosität, Druck, Temperatur und Trockenstoff-Konzentration und unter den physikalischen Randbedingungen Druck und Temperatur am Ort des Druckzerstäubens (DZ) verstanden wird,
    • wobei die Steuerungsparameter, jeweils bezogen auf das Konzentrat (K), das Hochdruck-Niveau (p2), die erhöhte Zerstäubungs-Temperatur (T3), eine erhöhte Strömungsgeschwindigkeit (v) beim Hochdruck-Erhitzen (H) und eine Intensität des Scherbeanspruchens (S) sind, und
    • wobei die Steuerungsparameter mittels einer vor oder bei Inbetriebnahme der Anlage zum Sprühtrocknen erstellten oder hinterlegten Kalibrierfunktion eingestellt werden.

8.  Anlage (100), welche zur Durchführung des Verfahrens nach Anspruch 1 geeignet ist, bestehend aus

    • einem Trocknerturm (2) mit Druckzerstäuber-Düsen (2a),

• einem Vorlaufbehälter (4), der über eine Niederdruck-Leitung (12), in der eine Vorlaufpumpe (6) angeordnet ist, fluidgängig mit dem Eintritt einer Hochdruck-Kolbenpumpe (10) verbunden ist,

• einem Hochdruck-Wärmeaustauscher (18), der in einer den Ausgang der Hochdruck-Kolbenpumpe (10) mit den Druckzerstäuber-Düsen (2a) fluidgängig verbindenden Hochdruck-Leitung (14) angeordnet ist, wobei der Hochdruck-Wärmeaustauscher (18) als Rohrbündel-Wärmeaustauscher mit einer Vielzahl von vom Konzentrat (K) parallel durchströmten Innenrohren (20) ausgebildet ist, die kreisringförmig und auf einem einzigen Kreis (26) angeordnet sind und in Summe einen Innenkanal (20*) ausbilden, der, in Strömungsrichtung gesehen, im Anschluss an die Innenrohre (20) in Form eines umlaufenden Ringraumes (22) ausgeführt ist,

• einem ersten Hochdruck-Leitungsabschnitt (14.1) der Hochdruck-Leitung (14), die den Ausgang der Hochdruck-Kolbenpumpe (10) mit dem Eingang des Hochdruck-Wärmeaustauschers (18) verbindet,

• einem zweiten Hochdruck-Leitungsabschnitt (14.2) der Hochdruck-Leitung (14), die den Ausgang des Hochdruck-Wärmeaustauschers (18) fluidgängig mit den Druckzerstäuber-Düsen (2a) verbindet, wobei eine strömungstechnisch wirksame Länge des zweiten Hochdruck-Leitungsabschnitts (14.2) auf ein konstruktiv mögliches Mindestmaß reduziert ist, und

• Mitteln zur definierten Scherbeanspruchung des geförderten Konzentrats (K), die ausgangsseitig am Hochdruck-Wärmeaustauscher (18) angeordnet sind und die in einem ringraumförmigen austrittsseitigen Kanal (24) bestehen, der einerseits mit dem Ausgang des umlaufenden Ringraumes (22) und andererseits mit dem zweiten Hochdruck-Leitungsabschnitt (14.2) verbunden ist, wobei der ringraumförmige austrittsseitige Kanal (24) eine definierte Erstreckungslänge (L) und einen definierten längenabhängigen Verlauf seiner Kanaldurchtrittsquerschnitte (As) aufweist.

9. Anlage nach Anspruch 8,
**dadurch gekennzeichnet,**
**dass** die Kanaldurchtrittsquerschnitte (As) über die gesamte Erstreckungslänge (L) konstant sind.

10. Anlage nach Anspruch 9,
**dadurch gekennzeichnet,**
**dass** der Kanaldurchtrittsquerschnitt (As) dem Gesamtdurchtrittsquerschnitt aller parallel durchströmten Innenrohre (20) entspricht.

**Claims**

1. A method for heating a concentrate (K) in a spray-drying system (100) having a step (a):

   (a) increasing the pressure (P) of the concentrate (K), starting from a low-pressure level (p1) and a supply temperature (T1), to a high-pressure level (p2) which can reach a maximum of 350 bar,

   **characterized by** the sequence of the following steps (b) to (d):

   (b) high-pressure heating (H) of the concentrate (K) at the high-pressure level (p2) from the supply temperature (T1) to an elevated spraying temperature (T3), which lies in the range of 75 to 80°C, by means of a high-pressure heat exchanger (18) which is supplied on the secondary side with a heat-transfer medium (W) and which is configured as a tube bundle heat exchanger having a plurality of inner tubes, through which the concentrate (K) flows in parallel, which are arranged in the form of a circular ring and on a single circle and which together form an inner channel which adjoins the inner tubes in the shape of a circumferential annular space in the flow direction,
   (c) defined shear loading (S) of the concentrate (K) in the course of or immediately after the treatment according to step (b) with means which consist of an annular-space-shaped outlet-side channel which is connected on the one side to the outlet of the circumferential annular space and on the other side to a second high-pressure line portion and which has a defined extension length and a defined length-dependent progression of its channel passage cross-sections, and
   (d) subsequently, immediate transfer (Ü) of the concentrate (K) treated according to step (c) to the location of its pressurized spraying (DZ), wherein a transfer time (Δt) for the immediate transfer (Ü) is determined by a minimum possible effective distance in terms of flow between the means for implementing the step (c) and the location of the pressurized spraying (DZ).

2. The method according to Claim 1,
**characterized in that**
an elevated flow speed (v) of the concentrate (K) during the high-pressure heating (H) is increased by 20 to 25% in the treatment region located upstream of the high-pressure heating (H) compared to the flow speed thereof.

3. The method according to Claim 2,
**characterized in that**

the elevated flow speed (v) during the high-pressure heating (H) is a maximum of 3 m/s.

4. The method according to any one of the preceding claims,
   **characterized in that**
   the high-pressure level (p2) is up to a maximum of 350 bar.

5. The method according to any one of the preceding claims,
   **characterized in that**
   the elevated spraying temperature (T3) is adjusted to 80°C.

6. The method according to any one of the preceding claims,
   **characterized in that**
   the concentrate (K) is treated having a dry material concentration (c) of up to a maximum of 65% mass percent (65 m %).

7. A method for controlling the heating of a concentrate in a spray-drying system (100), wherein the concentrate (K) is treated by high-pressure heating (H) according to Claim 1,

   • wherein the control parameters for the high-pressure heating (H) are determined by the properties of the concentrate (K) to be heated and the physical boundary conditions,
   • wherein the properties of the concentrate (K) to be heated are understood to be the volumetric flow, viscosity, pressure, temperature and dry material concentration thereof, and the physical boundary conditions are understood to be the pressure and temperature at the location of the pressurized spraying (DZ),
   • wherein the control parameters, respectively relating to the concentrate (K), are the high-pressure level (p2), the elevated spraying temperature (T3), an elevated flow speed (v) during the high-pressure heating (H) and an intensity of the shear loading (S), and
   • wherein the control parameters are adjusted by means of a calibration function generated or saved before or during commissioning of the system for spray drying.

8. A system (100) which is suitable for implementing the method according to Claim 1, consisting of

   • a drying tower (2) having pressurized spray nozzles (2a),
   • a supply tank (4) which is fluidically connected to the intake of a high-pressure piston pump (10) via a low-pressure line (12), in which a supply pump (6) is arranged,

• a high-pressure heat exchanger (18) which is arranged in a high-pressure line (14) fluidically connecting the outlet of the high-pressure piston pump (10) to the pressurized spray nozzles (2a), wherein the high-pressure heat exchanger (18) is configured as a tube bundle heat exchanger having a plurality of inner tubes (20), through which the concentrate (K) flows in parallel, which are arranged in the form of a circular ring and on a single circle (26) and which together form an inner channel (20*) which adjoins the inner tubes (20) in the shape of a circumferential annular space (22) in the flow direction.
• a first high-pressure line portion (14.1) of the high-pressure line (14) which connects the outlet of the high-pressure piston pump (10) to the inlet of the high-pressure heat exchanger (18),
• a second high-pressure line portion (14.2) of the high-pressure line (14) which fluidically connects the outlet of the high-pressure heat exchanger (18) to the pressurized spray nozzles (2a), wherein an effective length in terms of flow of the second high-pressure line portion (14.2) is reduced to a structurally possible minimum size, and
• means for the defined shear loading of the conveyed concentrate (K), which are arranged on the outlet side of the high-pressure heat exchanger (18) and which consist of an annular-space-shaped outlet-side channel (24) which is connected on the one side to the outlet of the circumferential annular space (22) and on the other side to the second high-pressure line portion (14.2), wherein the annular-space-shaped outlet-side channel (24) has a defined extension length (L) and a defined length-dependent progression of its channel passage cross-sections ($A_s$).

9. The system according to Claim 8,
   **characterized in that**
   the channel passage cross-sections ($A_s$) are constant over the entire extension length (L).

10. The system according to Claim 9,
    **characterized in that**
    the channel passage cross-section ($A_s$) corresponds to the total passage cross-section of all inner tubes (20) that are flowed through in parallel.

**Revendications**

1. Procédé pour le chauffage d'un concentré (K) dans un système de séchage par atomisation (100), comprenant une étape (a) :

   (a) augmentation de la pression (P) du concentré (K), à partir d'un niveau de basse pression (p1) et d'une température de départ (T1), à un niveau de haute pression (p2) pouvant atteindre 350 bars maximum,

**caractérisé par** la séquence des étapes (b) à (d) suivantes :

(b) chauffage à haute pression (H) du concentré (K) au niveau de haute pression (p2) de la température de départ (T1) à une température d'atomisation élevée (T3) comprise entre 75 et 80°C, au moyen d'un échangeur de chaleur à haute pression (18), lequel est soumis côté secondaire à un fluide caloporteur (W) et conçu comme un échangeur de chaleur à faisceau de tubes avec une pluralité de tubes intérieurs traversés parallèlement par le concentré (K), lesquels sont disposés en forme d'anneau circulaire sur un seul cercle et forment conjointement un canal intérieur conçu sous la forme d'un espace annulaire circulaire prolongeant les tubes intérieurs, vu dans la direction d'écoulement,

(c) exposition du concentré (K) à une contrainte de cisaillement définie (S) pendant ou directement après le traitement selon l'étape (b) avec des moyens consistant en un canal côté sortie en forme d'espace annulaire, lequel est relié d'une part à la sortie de l'espace annulaire circulaire et d'autre part à une deuxième section de conduite haute pression et lequel présente une longueur d'extension définie et un tracé défini en fonction de la longueur, quant à ses sections transversales de passage de canal, et

(c) consécutivement, transfert immédiat (Ü) du concentré (K) traité selon l'étape (c) vers son site d'atomisation sous pression (DZ), dans lequel un temps de transfert (Δt) pour le transfert immédiat (Ü) est déterminé par une distance fluidiquement active minimale possible entre les moyens d'exécution de l'étape (c) et le site d'atomisation sous pression (DZ).

**2.** Procédé selon la revendication 1,
**caractérisé en ce que**
une vitesse d'écoulement élevée (v) du concentré (K) lors du chauffage à haute pression (H) est augmentée de 20 à 25% par rapport à la vitesse d'écoulement de celui-ci dans la zone de traitement située en amont du chauffage à haute pression (H) .

**3.** Procédé selon la revendication 2,
**caractérisé en ce que**
la vitesse d'écoulement élevée (v) lors du chauffage à haute pression (H) est de 3 m/s maximum.

**4.** Procédé selon l'une des revendications précédentes,

**caractérisé en ce que**
le niveau de haute pression (p2) est de 350 bar maximum.

**5.** Procédé selon l'une des revendications précédentes,
**caractérisé en ce que**
la température d'atomisation élevée (T3) est réglée à 80°C.

**6.** Procédé selon l'une des revendications précédentes,
**caractérisé en ce que**
le concentré (K) est traité avec une concentration en matières sèches (c) allant au maximum jusqu'à 65 pour cent en quantité (65%m).

**7.** Procédé de commande du chauffage d'un concentré dans un système de séchage par atomisation (100), dans lequel le concentré (K) est traité par chauffage à haute pression (H) selon la revendication 1,

• dans lequel les paramètres de commande pour le chauffage à haute pression (H) sont déterminés par les propriétés du concentré (K) à chauffer et par les conditions marginales physiques,
• dans lequel les propriétés considérées pour le concentré (K) à chauffer sont le flux volumique, la viscosité, la pression, la température et la concentration en matières sèches, et les conditions marginales physiques sont la pression et la température au niveau du site d'atomisation sous pression (DZ),
• dans lequel les paramètres de commande, respectivement rapportés au concentré (K), sont le niveau de haute pression (p2), la température d'atomisation élevée (T3), une vitesse d'écoulement élevée (v) lors du chauffage à haute pression (H) et une intensité de l'exposition au cisaillement (S), et
• dans lequel les paramètres de commande sont réglés au moyen d'une fonction d'étalonnage établie ou enregistrée avant ou pendant la mise en marche du système de séchage par pulvérisation.

**8.** Système (100) adapté pour la mise en œuvre du procédé selon la revendication 1, comprenant :

• une colonne de séchage (2) avec des buses d'atomisation sous pression (2a),
• une cuve d'alimentation (4) reliée fluidiquement à l'entrée d'une pompe à piston à haute pression (10) par le biais d'une conduite à basse pression (12) dans laquelle est disposée une pompe d'alimentation (6),
• un échangeur de chaleur à haute pression (18) disposé dans une conduite à haute pression (14) reliant fluidiquement la sortie de la pompe à piston à haute pression (10) aux buses d'atomisation sous pression (2a), l'échangeur de chaleur à haute pression (18) étant conçu comme un échangeur de chaleur à faisceau de tubes avec une pluralité de tubes intérieurs (20) traversés parallèlement par le concentré (K), lesquels sont disposés en forme d'anneau circulaire sur un seul cercle (26) et forment conjointement un canal intérieur (20*) conçu sous la forme d'un espace annulaire circulaire (22) prolongeant les tubes intérieurs (20), vu dans la direction d'écoulement,

• une première section de conduite à haute pression (14.1) de la conduite à haute pression (14), laquelle relie la sortie de la pompe à piston à haute pression (10) à l'entrée de l'échangeur de chaleur à haute pression (18),

• une deuxième section de conduite à haute pression (14.2) de la conduite à haute pression (14), laquelle relie fluidiquement la sortie de l'échangeur de chaleur à haute pression (18) aux buses d'atomisation sous pression (2a), dans lequel une longueur fluidiquement active de la deuxième section de conduite à haute pression (14.2) est réduite à une dimension minimale possible du point de vue de la construction, et

• des moyens pour l'exposition définie au cisaillement du concentré (K) transporté, lesquels sont disposés côté sortie sur l'échangeur de chaleur à haute pression (18) et lesquels consistent en un canal côté sortie en forme d'espace annulaire (24), lequel est relié d'une part à la sortie de l'espace annulaire circulaire (22) et d'autre part à la deuxième section de conduite haute pression (14.2), le canal côté sortie en forme d'espace annulaire (24) présentant une longueur d'extension définie (L) et un tracé défini en fonction de la longueur, quant à ses sections transversales de passage de canal (As).

9. Système selon la revendication 8,
   **caractérisé en ce que**
   les sections transversales de passage de canal (As) sont constantes sur toute la longueur d'extension (L).

10. Système selon la revendication 9,
    **caractérisé en ce que**
    la section transversale de passage de canal (As) correspond à la section transversale de passage totale de tous les tubes intérieurs (20) traversés parallèlement.

**Fig. 1 (Stand der Technik)**

**Fig. 1a**

**Figur 2**

(Stand der Technik)

**Figur 3**

**100**

W

W

p2, T3 = 80 °C, ⊿t

18

(H; S; v)

14.1
(V2)

14.2
(Ü)

p2, T1, t2

14

2a
(DZ)

2

c = 52-57 m% TS

(P)
10

12

6    4

p1

(B)
K

T1=58 °C

H

EP 3 474 682 B1

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3072486 A
- WO 2012040502 A1
- DE 9403913 U1
- DE 102005059463 A1
- DE 102014012279 A1
- DE 102013010460 A1